# EUROPÄISCHE PATENTSCHRIFT

(11) **EP 2 825 765 B1**
(45) Veröffentlichungstag und Bekanntmachung des Hinweises auf die Patenterteilung: **28.09.2016**
(21) Anmeldenummer: 13705449.0
(22) Anmeldetag: 18.02.2013
(51) Int. Cl.: F02M 63/00, F02M 51/06, F02M 61/08, F02M 61/12

(54) **BAUGRUPPE**
ASSEMBLY
GROUPE COMPOSÉ

(30) Priorität: 16.03.2012 DE 102012204216
(43) Veröffentlichungstag der Anmeldung: 21.01.2015
(73) Patentinhaber: Robert Bosch GmbH, 70442 Stuttgart (DE)
(72) Erfinder: KRAUS, Juergen, 96175 Pettstadt (DE); EBERT, Juergen, 96146 Altendorf (DE); LANDENFELD, Tilo, 71665 Vaihingen/Enz (DE); SCHMIEDER, Dietmar, 71706 Markgroeningen (DE)
(86) Internationale Anmeldenummer: PCT/EP2013/053208
(87) Internationale Veröffentlichungsnummer: WO 2013/135460

(56) Entgegenhaltungen:
- EP-A1- 1 519 035
- EP-A1- 1 780 405
- EP-A1- 1 813 805
- DE-A1- 10 159 749
- DE-A1-102007 002 402
- DE-A1-102009 047 009

## Beschreibung

Die Erfindung geht aus von einer Baugruppe nach dem Oberbegriff des Anspruchs 1.

Eine bekannte Baugruppe zur Abdichtung eines in einer Durchführung in einem Körper geführten Kraftübertragungselements (DE 10 2009 047 009 A1) dient in einem Einspritzventil in Kraftstoffeinspritzanlagen für Brennkraftmaschinen zum Abdichten von nicht kraftstoffresistenten Bauteilen des Ventils, wie dem piezoelektrischen Aktor zur Ventilsteuerung, gegenüber dem in einem Ventilraum des Ventils unter Systemdruck stehenden Kraftstoff. Der Ventilraum ist von einem Ventilgehäuse und einem am Ventilgehäuse dicht festgelegten Ventilkörper begrenzt. Der Ventilkörper weist eine Durchführung für eine Ventilnadel auf, die sich von einer dem Ventilraum vorgelagerten Ventilöffnung bis zum Aktor erstreckt. Im Bereich der Durchführung trägt die Ventilnadel einen auf ihr festsetzenden Gleitring, der mit dem Ventilkörper einen engen Radialspalt innerhalb der Durchführung begrenzt. Um einen Durchtritt des Kraftstoffs durch diesen Radialspalt zu unterbinden, ist die den Ventilraum begrenzende Stirnseite des Ventilkörpers von einer ringförmigen Membran überdeckt, die mit ihrem inneren Rand am Gleitring und mit ihrem äußeren Rand am Ventilkörper festgelegt ist. Der von der Membran am Ventilkörper überdeckte Bereich ist mit einem Medium gefüllt. Das Medium besitzt eine Fließgrenze, die abhängig von dem im Ventilraum herrschenden Kraftstoffdruck gewählt ist, beispielsweise eine weiche Masse mit hoher Fließgrenze, wie Bingham-Flüssigkeit, dickflüssiges Silikonöl oder Transformatorenöl. Zur Füllung des Überdeckungsbereichs der Membran mit dem Medium ist im Ventilkörper eine Kammer vorhanden, die den Ventilkörper in einen vorderen und einen hinteren Körperteil unterteilt. Im vorderen Körperteil ist eine Verbindung zu dem Überdeckungsbereich hergestellt und in dem hinteren Körperteil ist mittels des Gleitrings die Gleitführung der Ventilnadel im Ventilkörper realisiert. Die Füllung der Kammer mit dem Medium erfolgt über ein in die Ventilnadel eingebrachtes Füllloch, das in der Kammer mündet. Nach Einfüllen des Mediums wird das Füllloch durch Einpressen einer Kugel verschlossen.

Aus der EP 1 813 805 A1 ist bereits eine Baugruppe mit einem ersten Bauelement, mit einem vom ersten Bauelement umschlossenen zweiten Bauelement und mit einer einen Radialspalt zwischen den Bauelementen überdeckenden, am ersten und zweiten Bauelement dicht festgelegten Membran bekannt. Mit der wenigstens einen Membran wird zwischen den Bauelementen ein eingeschlossenes Volumen eines Mediums definiert. In einem der Bauelemente ist ein Füllkanal zum Einbringen des Mediums angeordnet, wobei der Füllkanal an einer Außenseite des Bauelementes beginnt, die außerhalb des durch die Membran eingeschlossenen Volumens liegt. Nach dem Befüllen des durch die Membran und die Bauelemente eingeschlossenen Volumens mit einem gewünschten Medium wird der Füllkanal mit einer Dichtkugel sicher und fest verschlossen, so dass ein Austritt des Mediums aus dem Volumen ausgeschlossen ist.

### Offenbarung der Erfindung

Die erfindungsgemäße Baugruppe mit den Merkmalen des Anspruchs 1 hat den Vorteil, dass mittels des in einem der Bauteile vorhandenen Füllventils einerseits die konstruktive Ausgestaltung der Baugruppe zur Füllung mit Medium deutlich vereinfacht wird und andererseits das eingefüllte Mediumvolumen auch bei auf die Baugruppe wirkenden, hohen und schwellenden Drücken zuverlässig abgedichtet ist. Insbesondere bei Ausführung des Füllventils als Rückschlagventil führt die Zunahme des Drucks im Mediumvolumen zu einem zusätzlichen Druck auf das Ventilglied des Rückschlagventils und verstärkt die Schließkraft des Ventils. Anders als bei der bekannten Abdichtung des eingeschlossenen Mediumvolumens mittels einer in das eine Bauteil eingepressten Kugel, muss für das Bauteil zwecks Einpressen der Kugel nicht ein relativ weiches Material gewählt werden, vielmehr kann vorteilhaft ein recht hartes Material eingesetzt werden. Die Montage des Füllventils ist einfach und prozesssicher. Der Füllprozess, zu dem ein Entlüften der Baugruppe erforderlich ist, lässt sich mit dem Füllventil vorteilhaft in zwei Etappen und ggf. auch in zwei verschiedenen Prozessstationen durchführen, indem zunächst die Baugruppe durch Öffnen des Füllventils entlüftet und anschließend unter erneutem Öffnen des Füllventils das Medium eingebracht wird.

Durch die in den weiteren Ansprüchen aufgeführten Maßnahmen sind vorteilhafte Weiterbildungen und Verbesserungen der im Anspruch 1 angegebenen Baugruppe möglich.

Erfindungsgemäß ist das Füllventil in einem Füllkanal angeordnet, der in dem einen Bauelement verläuft und außen an der Baugruppe zugänglich ist. Damit bleibt das integrierte Füllventil für den Entlüftungs- und Füllprozess gut zugänglich, und durch entsprechende Gestaltung des Füllkanals lassen sich zugleich Komponenten des Füllventils, wie Ventilsitz und Ventilkammer mit Zu- und Ablauf, realisieren.

Hierzu ist gemäß einer vorteilhaften Ausführungsform der Erfindung der Füllkanal als Stufenbohrung mit einem ersten Bohrungsabschnitt und einem demgegenüber durchmessergrößeren zweiten Bohrungsabschnitt und am Übergang der Bohrungsabschnitte ein Ventilsitz für ein Ventilglied ausgebildet. Vorzugsweise ist das Ventilglied eine mit PTFE beschichtete Stahlkugel, und der Ventilsitz weist zur optimalen Kugelabdichtung einen gegen die Bohrungsachse gemessenen Schrägungswinkel α zwischen 5° und 60° auf.

Gemäß einer vorteilhaften Ausführungsform der Erfindung weist die Stufenbohrung einen an den zweiten Bohrungsabschnitt sich anschließenden dritten Bohrungsabschnitt auf, der mit einem gegenüber dem Durchmesser des zweiten Bohrungsabschnitts vergrößerten Durchmesser exzentrisch zur Bohrungsachse angeordnet ist. In den dritten Bohrungsabschnitt ist ein das Ventilglied respektive die Kugel in Richtung Ventilsitz belastender Federarm festgelegt. Der Federarm realisiert eine bauraumkleine, flachbauende Rückstell- oder Ventilschließfeder des Füllventils mit ausreichender Schließkraft, wobei vorteilhaft auf die Baugruppe wirkende Drücke von dem Mediumvolumen auf den Federarm und das Ventilglied übertragen werden und die Schließkraft des Ventils erhöhen.

Gemäß einer vorteilhaften Ausführungsform der Erfindung ist der Federarm als Teil eines schalenförmigen Federelements mit Schalenboden und Schalenrand aus dem Schalenboden freigestanzt und das Federelement in den dritten Bohrungsabschnitt eingesetzt und durch Einpressen oder Einschweißen des Schalenrands festgelegt. Ein solches Federelement lässt sich kostengünstig als einfaches Stanz-Biegeteil aus hochfestem Edelstahl fertigen. Durch Festlegen einer bestimmten Einpresstiefe des Federelements in den dritten Bohrungsabschnitt lässt sich die Schließkraft des Ventils einstellen.

Die erfindungsgemäße Baugruppe wird vorteilhaft in Ventilen zum Zumessen von Fluid, insbesondere zum dosierten Einspritzen von Kraftstoff in Kraftstoffeinspritzanlagen von Brennkraftmaschinen, eingesetzt und hier zur Generierung einer Dichtungsbaugruppe zum Abdichten einer Ventilkammer gegen Fluidaustritt oder eines hydraulischen Kopplers zum Ausgleich unterschiedlicher thermischer Dehnungen von Ventilgehäuse und einem im Ventilgehäuse axial abgestützten Kraftübertragungselement, wie einen piezoelektrischen oder magnetostriktiven Aktor und eine Ventilnadel, herangezogen.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Figur 1 ein Ventil zum Zumessen von Fluid, teilweise geschnitten,
Figur 2 eine vergrößerte Darstellung eines Längsschnitts des in Figur 1 in Seitenansicht dargestellten unteren Teils des Ventils,
Figur 3 eine vergrößerte Darstellung des Ausschnitts III in Figur 2,
Figur 4 eine Unteransicht eines Federelements im Ventil in Richtung Pfeil IV in Figur 3,
Figur 5 einen Längsschnitt eines hydraulischen Kopplers im Ventil gemäß Figur 1,
Figur 6 eine gleiche Darstellung wie in Figur 5 eines modifizierten hydraulischen Kopplers.

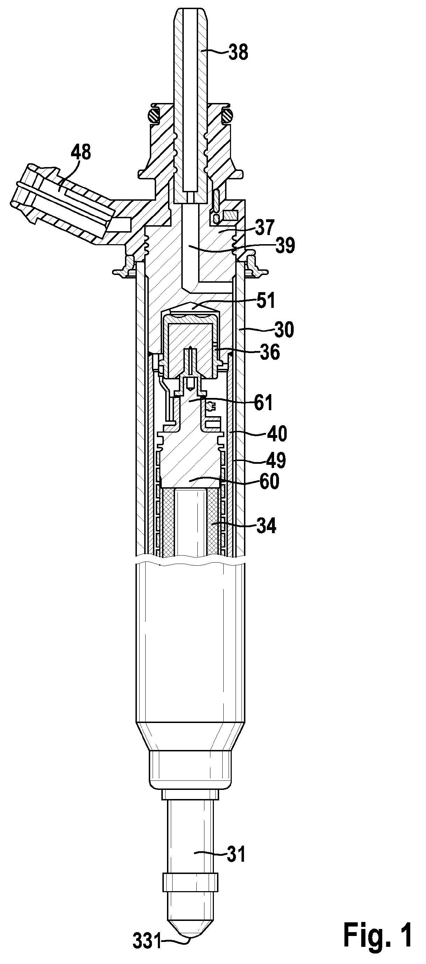

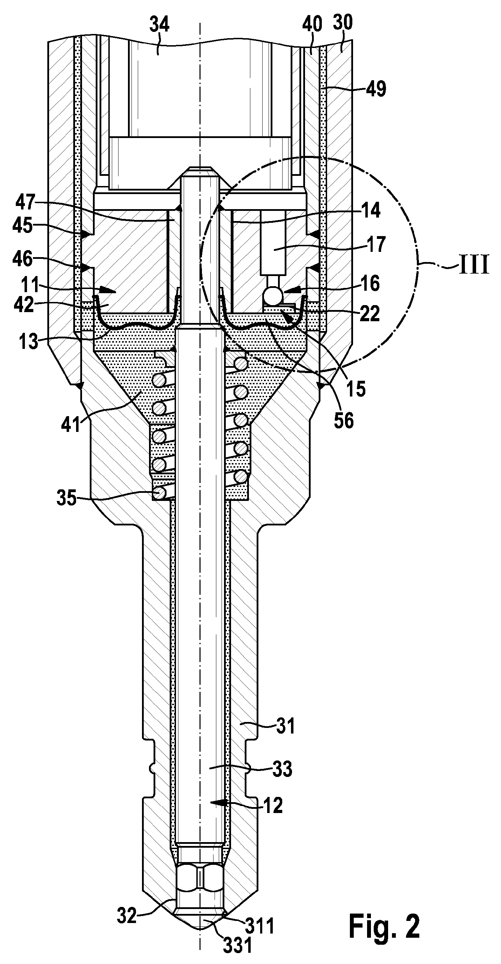

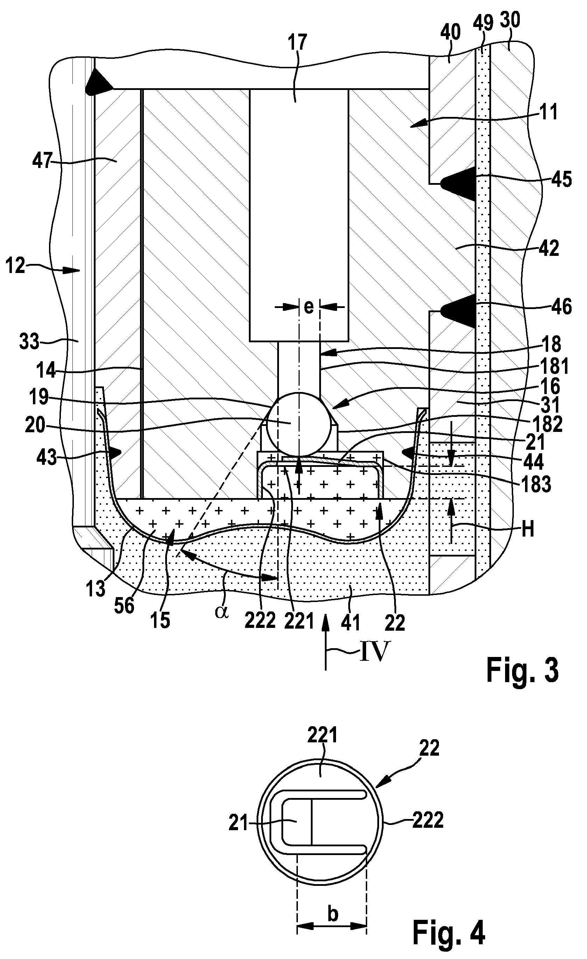

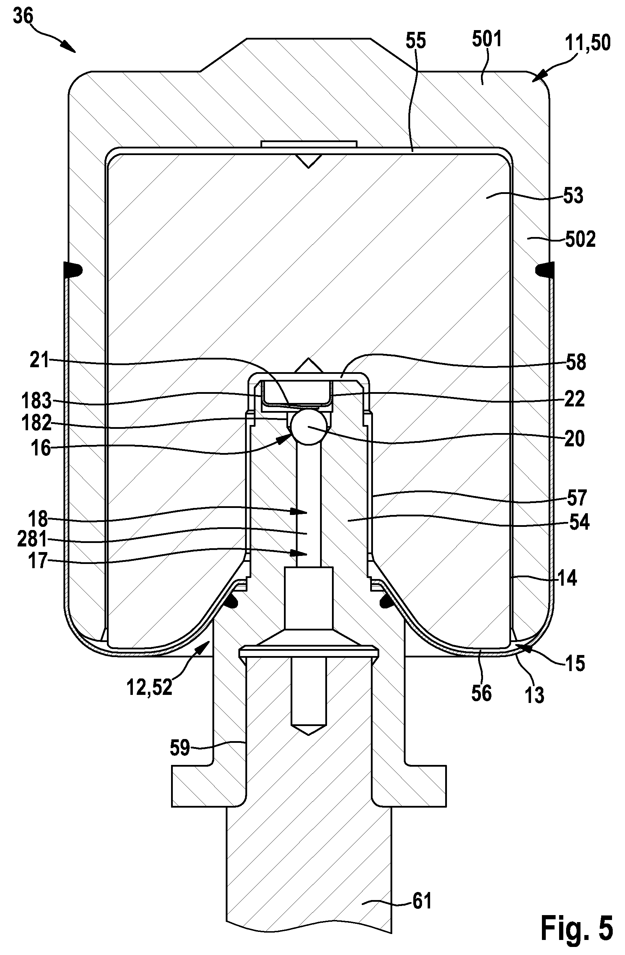

Die hier vorgestellte, neuartige Baugruppe wird nachfolgend in Verbindung mit ihrem Einbau in ein Ventil zum Zumessen eines Fluids, z.B. in ein Einspritzventil für Kraftstoff in Kraftstoffeinspritzanlage von Brennkraftmaschinen, beschrieben. In einem solchen in Figur 1 dargestellten Ventil kann vorteilhaft die Baugruppe zur Abdichtung einer Ventilkammer im Ventilgehäuse, wie dies in Figur 2 und 3 dargestellt ist, und/oder als ein im Ventilgehäuse angeordneter hydraulischer Koppler, wie dies in Figur 4 und 5 dargestellt ist, eingesetzt werden.

Die Baugruppe (Figur 2 bis 6) weist ein erstes Bauelement 11, ein vom ersten Bauelement 11 umschlossenes zweites Bauelement 12, eine flexible, z.B. kreisringförmige Membran 13, die am ersten und zweiten Bauelement 11, 12 festgelegt ist und einen zwischen den Bauelementen 11, 12 vorhandenen Radialspalt 14 überdeckt, und ein von den Bauelementen 11, 12 und der Membran 13 eingeschlossenes Volumen 15 eines Mediums auf. Das Medium ist eine Flüssigkeit oder eine weiche oder knetbare Substanz, kann in speziellen Anwendungsfällen aber auch ein Gas sein. Zum Einbringen des Mediums ist in einem der Bauelemente 11, 12 ein Füllventil 16 angeordnet, das in Richtung des eingeschlossenen Volumens 15 öffnet. Das Füllventil16 ist als Rückschlagventil mit Federrückstellung ausgebildet und in einem im ersten Bauelement 11 oder im zweiten Bauelement 12 verlaufenden Füllkanal 17 angeordnet. Wie in der Schnittdarstellung des vergrößerten Ausschnitts gemäß Figur 3 zu sehen ist, ist der Füllkanal 17 als Stufenbohrung 18 mit einem ersten Bohrungsabschnitt 181 und einem demgegenüber durchmessergrößeren zweiten Bohrungsabschnitt 182 sowie mit einem an den zweiten Bohrungsabschnitt 182 sich anschließenden dritten Bohrungsabschnitt 183 ausgebildet. Am Übergang vom ersten zum zweiten Bohrungsabschnitt 181, 182 ist ein Ventilsitz 19 für ein federbelastetes Ventilglied 20 ausgebildet. Der dritte Bohrungsabschnitt 183 weist einen gegenüber dem Durchmesser des zweiten Bohrungsabschnitts 182 größeren Durchmesser auf und ist exzentrisch zur Bohrungsachse angeordnet. Im dritten Bohrungsabschnitt 183 ist ein das Ventilglied 20 in Ventilschließrichtung, d.h. in Richtung Ventilsitz 19, belastender Federarm 21 festgelegt. Das Ventilglied 20 ist vorzugsweise eine mit PTFE beschichtete Stahlkugel, und der Ventilsitz 19 weist zur optimalen Kugelabdichtung einen Schrägungswinkel α gegen die Bohrungsachse zwischen 5° und 60° auf. Der auf dem Ventilglied 20 kraftschlüssig aufliegende Federarm 21 ist Teil eines schalenförmigen Federelements 22 mit Schalenboden 221 und Schalenrand 222 (Figur 3 und 4) und ist aus dem Schalenboden 221 freigestanzt. Zur Einstellung der auf das Ventilglied 20 wirkenden Federkraft des Federarms 21 ist das Federelement 22 mit einer Höhe H (Figur 3) in den dritten Bohrungsabschnitt 183 eingesetzt und festgelegt, was z.B. durch Einpressen oder Einschweißen des Schalenrands 222 erfolgt. Das Federelement 22 ist ein Stanz-Biegeteil aus hochfestem Federstahl. Durch die Exzentrizität des dritten Bohrungsabschnitts 183 wird eine möglichst große Biegelänge b (Figur 4) des Federarms 21 erzielt.

Zum Einbringen des Mediums nach Zusammenbau der Baugruppe wird zunächst die Baugruppe entlüftet, d. h. das für das Medium vorgehaltene Volumen 15 zwischen den Bauelementen 11 und 12 und der Membran 13 evakuiert, wozu das Füllventil 16 geöffnet wird. Hierzu wird durch den ersten Bohrungsabschnitt 181 der Stufenbohrung 18 hindurch eine axiale Verschiebekraft auf das Ventilglied 20 aufgebracht, die das Ventilglied 20 gegen die Rückstellkraft des Federarms 21 vom Ventilsitz 19 abhebt. Nach Entlüften der Baugruppe schließt das Füllventil 16 durch Wegfall der Verschiebekraft am Ventilglied 20. Anschließend wird über ein bis zum ersten Bohrungsabschnitt 181 eingeführtes Füllrohr das Medium mit einem Druck, der die Federkraft des Federarms 21 übersteigt, sicher in die Baugruppe eingebracht, so dass das vorgegebene Volumen 15 vollständig mit dem Medium gefüllt ist. Die auf das Ventilglied 20 wirkende Schließkraft wird nunmehr um den im eingeschlossenen Volumen 15 herrschenden Druck vergrößert.

Das Ventil zum Zumessen eines Fluids, insbesondere von Kraftstoff, in dem die beschriebene Baugruppe vorzugsweise zum Einsatz kommt, ist in Figur 1 teilweise geschnitten dargestellt. Das Ventil weist in bekannter Weise ein Ventilgehäuse 30 auf, in dessen einen Gehäuseende ein Ventilsitzträger 31 fest eingesetzt ist. Am dem vom Ventilgehäuse 30 abgekehrten freien Ende des Ventilsitzträgers 31 ist eine Zumessöffnung 32 angeordnet (Figur 2), die von einem an einer Ventilnadel 33 ausgeformten Schließkopf 331 in Verbindung mit einem am Ventilsitzträger 31 ausgebildeten Ventilsitz 311 steuerbar ist. Die Ventilnadel 33 wird von einem piezoelektrischen oder magnetostriktiven Aktor 34 gegen die Rückstellkraft einer Ventilschließfeder 35 betätigt, wobei der Aktor 34 mit einem hydraulischen Koppler 36 verbunden ist, der im Ventilgehäuse 30 kardanisch gelagert ist. Hierzu ist das andere Ende des Ventilgehäuses 30 mit einem Anschlussstück 37 abgeschlossen, in dem eine mit einem Anschlussstutzen 38 zum Zuführen von Fluid verbundene Zulaufbohrung 39 ausgebildet ist. Aktor 35 und hydraulischer Koppler 36 sind in einem am Anschlussstück 37 befestigten Gehäuserohr 40 angeordnet, und zwischen Ventilgehäuse 30 und Gehäuserohr 40 besteht ein Ringspalt 49, der die Zulaufbohrung 39 im Anschlussstück 37 mit einer der Zumessöffnung 32 im Ventilsitzträger 31 vorgelagerte Ventilkammer 41 verbindet.

Wie in Figur 2 und 3 dargestellt ist, dient die vorstehend beschriebene Baugruppe zum Abdichten der Ventilkammer 41 und damit des den nicht fluid- bzw. kraftstoffresistenten Aktor 34 enthaltenden Gehäuserohrs 40 gegenüber dem in der Ventilkammer 41 befindlichen Fluid. Dabei bildet das erste Bauelement 11 einen die Ventilkammer 41 begrenzenden Ventilkörper 42, der einerseits mit dem Ende des Gehäuserohrs 40 und andererseits mit dem Ventilsitzträger 31 jeweils fest und fluiddicht verbunden ist (Schweißnähte 45 und 46 in Figur 2 und 3). Das zweite Bauteil 12 bildet die Ventilnadel 33, die durch den Ventilkörper 42 unter Belassung des Radialspalts 14 hindurchgeführt ist. Die ringförmige, flexible Membran 13 ist mit ihren inneren Rand an der Ventilnadel 33 und mit ihrem äußeren Rand am Ventilkörper 42 jeweils fluiddicht befestigt, was durch die Schweißnähte 43 und 44 in Figur 2 und 3 symbolisiert ist. Aus fertigungstechnischen Gründen trägt die Ventilnadel 33 einen festen Gleitring 47 zur Führung im Ventilkörper 42, so dass der Radialspalt 14 zwischen dem einen Teil der Ventilnadel 33 darstellenden Gleitring 47 und dem Ventilkörper 42 vorhanden und der innere Rand der Membran 13 am Gleitring 47 befestigt ist. Der das Füllventil 16 enthaltende Füllkanal 17 ist im Ventilkörper 42 angeordnet und das eingeschlossene Volumen 15 des Mediums ist in einem von der Membran 13 am Ventilkörper 42 überdeckten Überdeckungsbereich 56 konzentriert. Das Medium im eingeschlossenen Volumen 15 ist eine weiche Substanz mit hoher Fließgrenze, z.B. eine Bingham-Flüssigkeit, ein dickflüssiges Silikonöl, weiches oder knetbares Material, z.B. ein Elastomer, oder Transformatorenöl.

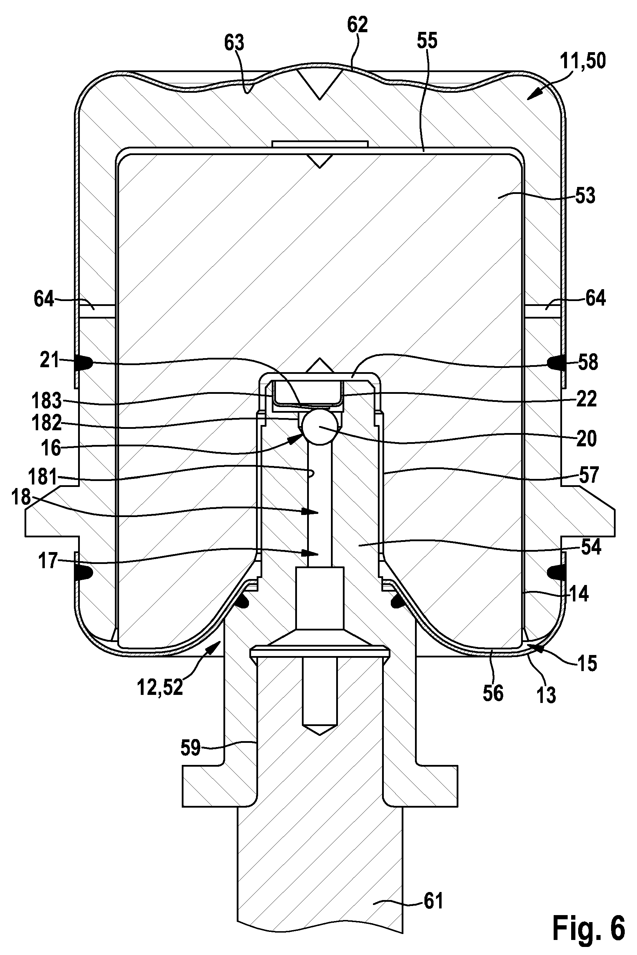

Wie in Figur 5 und 6 dargestellt ist, ist die beschriebene Baugruppe im Ventil gemäß Figur 1 auch zur Realisierung des hydraulischen Kopplers 36 eingesetzt. Hierzu bildet das erste Bauelement 11 ein topfförmiges Kopplergehäuse 50 mit Topfboden 501 und Topfmantel 502, das in einer Ausnehmung 51 im Anschlussstück 37 kardanisch gelagert ist. Das zweite Bauelement 12 bildet ein von einem Kraftübertragungselement, hier dem Aktor 34, beaufschlagbares, axial verschiebbares Kopplerglied 52, das einen im Kopplergehäuse 50 gleitgeführten Kolben 53 und einen fest mit dem Kolben 53 verbunden Koppelbolzen 54 zum Anbinden des Kraftübertragungselements, hier des Aktors 34, aufweist. Der Kolben 53 begrenzt mit dem Topfmantel 502 des Kopplergehäuses 50 den Radialspalt 14 und mit dem Topfboden 501 einen Kopplerspalt 55. Das Füllventil 16 ist im Kopplerglied 52 angeordnet, und das eingeschlossene Volumen 15 des Mediums ist über den Radialspalt 14 auf den Überdeckungsbereich 56 der an Kopplergehäuse 50 und Kopplerglied 52 festgelegten Membran 13 und auf den Kopplerspalt 55 verteilt. Als Medium ist eine Flüssigkeit, beispielsweise ein Hydrauliköl, eingesetzt.

Wie Figur 5 zeigt, ist die kopplergliedseitige Festlegung der Membran 13 am Koppelbolzen 54 vorgenommen. Der Koppelbolzen 54 ist in einer im Kolben 53 vorhandenen Ausnehmung 57 befestigt und begrenzt mit dem Grund der Ausnehmung 57 eine Hohlraum 58, der mit dem Überdeckungsbereich 56 in Verbindung steht. Der Füllkanal 17 mit dem darin integrierten Füllventil 16 verläuft im Koppelbolzen 54 und mündet in den Hohlraum 58, so dass sich das in Kopplergehäuse 50, Kolben 53 und Membran 13 eingeschlossene Volumen 15 des Mediums bis in den Hohlraum 58 erstreckt. Der Koppelbolzen 54 ist an seinem aus dem Kolben 53 vorstehenden Ende mit einer Einsenkung 59 und der Aktor 34 mit einer Kraftübertragungsplatte 60 versehen, an der ein in die Einsenkung 59 im Koppelbolzen 54 eintauchender Zapfen 61 angeformt ist. Der Zapfen 61 ist in der Einsenkung 59 festgelegt, z.B. durch Einpressen. Der Aktor 34 ist über einen an das Ventilgehäuse 30 angeformten elektrischen Anschlussstecker 48 bestrombar.

Die Baueinheit aus Aktor 34 und hydraulischem Koppler 36 ist unter Wirkung der Ventilschließfeder 35 kraftschlüssig zwischen Ventilnadel 33 und Anschlussstück 37 eingespannt. Bewirkt eine Temperaturänderung eine unterschiedliche Ausdehnung von Aktor 34 und Ventilgehäuse 30, so vergrößert sich der Druck des Kolbens 53 auf den Kopplerspalt 55. Der erhöhte Druck im Kopplerspalt 55 bewirkt eine Verdrängung von Medium aus dem Kopplerspalt 55, das über den Radialspalt 14 in den Überdeckungsbereich 56 der Membran 13 verschoben wird. Verringert sich infolge Temperaturänderung der Kolbendruck auf den Kopplerspalt 55 wieder, so erzeugt die Membran 13 eine ausreichend hohen Druckkraft, um Medium aus dem Überdeckungsbereich 56 über den Radialspalt 14 wieder in den Kopplerspalt 55 bei gleichzeitigem Verschieben des Kolbens 53 zurückzudrücken.

Der in Figur 6 im Längsschnitt dargestellte hydraulische Koppler 36 ist gegenüber dem zu Figur 5 beschriebenen hydraulischen Koppler 36 insoweit modifiziert, als zusätzlich zur Membran 13 auf der von dem Kopplerspalt 55 abgekehrten Außenseite des Kopplergehäuses 50 eine zweite Membran 62 angeordnet ist, die den Topfboden 501 des Kopplergehäuses 50 überspannt und auf dem Topfmantel 502 des Kopplergehäuses 50 mediumdicht, also flüssigkeitsdicht, festgelegt ist. Zwischen der zweiten Membran 62 und dem Kopplergehäuse 50 verbleibt ein Ausgleichsraum 63, der über mindestens eine Bohrung 64 im Topfmantel 502 und über den Radialspalt 13 mit dem Kopplerspalt 55 in Verbindung steht. Alternativ kann der Ausgleichsraum 63 auch über eine im Topfboden 501 vorgesehene Axialbohrung direkt mit dem Kopplerspalt 55 verbunden sein. Über die zum Überdeckungsbereich 56 der Membran 13 bestehende Verbindung zum Hohlraum 58 am Grund der Ausnehmung 57 im Kolben 53 ist auch der Ausgleichsraum 63 mit dem Medium gefüllt. Der Ausgleichsraum 63 vergrößert das insgesamt eingeschlossene Volumen 15 des Mediums, so dass größere thermische Ausdehnungsunterschiede von Ventilgehäuse 30 und Baueinheit aus Aktor 34 und Ventilnadel 33 (Figur 1) kompensiert werden können. Im Übrigen stimmt der hydraulische Koppler 36 gemäß Figur 6 mit dem in Figur 5 überein, so dass gleiche Bauteile mit gleichen Bezugszeichen versehen sind.

## Patentansprüche

1. Baugruppe mit einen ersten Bauelement (11), mit einem vom ersten Bauelement (11) umschlossenen zweiten Bauelement (12), mit einer einen Radialspalt (14) zwischen den Bauelementen (11, 12) überdeckenden, am ersten und zweiten Bauelement (11, 12) dicht festgelegten Membran (13) und mit einem von den Bauelementen (11, 12) und der Membran (13) eingeschlossenen Volumen (15) eines Mediums, wobei in einem der Bauelemente (11, 12) ein Füllventil (16) zum Einbringen des Mediums angeordnet ist und das Füllventil (16) in einem im Bauelement (11, 12) verlaufenden Füllkanal (17) angeordnet ist, wobei der Füllkanal (17) an einer Außenseite des Bauelementes (11, 12) beginnt, die außerhalb des durch die Membran (13) eingeschlossenen Volumens (15) liegt,
**dadurch gekennzeichnet,**
**dass** das Füllventil (16) als Rückschlagventil mit Federrückstellung ausgebildet ist.

2. Baugruppe nach Anspruch 1, **dadurch gekennzeichnet, dass** der Füllkanal (17) als Stufenbohrung (18) mit einem ersten Bohrungsabschnitt (181) und einem durchmessergrößeren zweiten Bohrungsabschnitt (182) und am Übergang von erstem und zweitem Bohrungsabschnitt (181, 182) ein Ventilsitz (19) für ein Ventilglied (20) ausgebildet ist.

3. Baugruppe nach Anspruch 2, **dadurch gekennzeichnet, dass** die Stufenbohrung (18) einen an den zweiten Bohrungsabschnitt (182) sich anschließenden dritten Bohrungsabschnitt (183) aufweist, der mit einem gegenüber dem Durchmesser des zweiten Bohrungsabschnitts (182) größeren Durchmesser exzentrisch zur Bohrungsachse angeordnet ist, und dass im dritten Bohrungsabschnitt (183) ein das Ventilglied (20) belastender Federarm (21) festgelegt ist.

4. Baugruppe nach Anspruch 3, **dadurch gekennzeichnet, dass** der Federarm (21) als Teil eines schalenförmigen Federelements (22) mit Schalenboden (221) und Schalenrand (222) aus dem Schalenboden (221) freigeschnitten ist und dass das Federelement (22) mit dem Schalenrand (222) in den dritten Bohrungsabschnitt (183) unverschieblich eingesetzt, vorzugsweise eingepresst oder eingeschweißt, ist.

5. Baugruppe nach Anspruch 4, **dadurch gekennzeichnet, dass** das Federelement (22) ein Stanz-Biegeteil aus hochfestem Federstahl ist.

6. Baugruppe nach einem der Ansprüche 2 bis 5, **dadurch gekennzeichnet, dass** das Ventilglied (20) eine mit PTFE beschichtete Stahlkugel ist.

7. Baugruppe nach Anspruch 6, **dadurch gekennzeichnet, dass** der Ventilsitz (19) einen Schrägungswinkel α gegen die Bohrungsachse zwischen 5° und 60° aufweist.

8. Baugruppe nach einem der Ansprüche 1 bis 7, **gekennzeichnet durch** ihre Anordnung in einem Ventilgehäuse (30) eines Ventils zum Zumessen von Fluid.

9. Baugruppe nach Anspruch 8, **dadurch gekennzeichnet, dass** das erste Bauelement (11) einen eine Ventilkammer (41) im Ventilgehäuse (30) abschließenden Ventilkörper (42) und das zweite Bauelement (12) eine in dem Ventilkörper (42) gleitgeführte Ventilnadel (33) zum Steuern einer der Ventilkammer (41) nachgeordneten Zumessöffnung (32) bildet und dass der das Füllventil (16) enthaltende Füllkanal (17) im Ventilkörper (42) angeordnet und das eingeschlossene Volumen (15) in einem von der Membran (13) am Ventilkörper (42) überdeckten Überdeckungsbereich (56) konzentriert ist.

10. Baugruppe nach Anspruch 9, **dadurch gekennzeichnet, dass** das Medium eine weiche Substanz mit hoher Fließgrenze ist, z.B. Bingham-Flüssigkeit, knetbares Material, ein Elastomer, dickflüssiges Silikonöl oder Transformatorenöl.

11. Baugruppe nach Anspruch 8, **dadurch gekennzeichnet, dass** in einem im Ventilgehäuse (30) integrierten hydraulischen Koppler (36) das erste Bauelement (11) ein topfförmiges Kopplergehäuse (50) mit Topfboden (501) und Topfmantel (502) und das zweite Bauelement (12) ein von einem Kraftübertragungselement beaufschlagbares Kopplerglied (52) mit einem im Kopplergehäuse (50) gleitgeführten Kolben (53) und einem fest mit dem Kolben (53) verbunden Koppelbolzen (54) zum Anbinden des Kraftübertragungselements bildet, dass der Kolben (53) zusammen mit dem Topfmantel (502) des Kopplergehäuses (50) den Radialspalt (14) und mit dem Topfboden (501) des Kopplergehäuses (50) einen Kopplerspalt (55) begrenzt und dass der das Füllventil (16) enthaltende Füllkanal (17) im Kopplerglied (52) angeordnet und das eingeschlossene Volumen (15) über den Radialspalt (14) auf einen von der Membran (13) an Kopplergehäuse (50) und Kopplerglied (52) überdeckten Überdeckungsbereich (56) und auf den Kopplerspalt (55) verteilt ist.

12. Baugruppe nach Anspruch 11, **dadurch gekennzeichnet, dass** die kopplergliedseitige Festlegung der Membran (13) am Koppelbolzen (54) vorgenommen ist, dass der Koppelbolzen (54) in einer im Kolben (53) vorgehaltenen zentralen Ausnehmung (57) befestigt ist und mit dem Grund der Ausnehmung (57) einen mit dem Überdeckungsbereich (56) der Membran (13) in Verbindung stehenden Hohlraum (58) begrenzt und dass der das Füllventil (16) enthaltende Füllkanal (17) im Koppelbolzen (54) verläuft und in den Hohlraum (58) mündet und das eingeschlossene Volumen (15) sich bis in den Hohlraum (58) erstreckt.

13. Baugruppe nach Anspruch 11 oder 12, **dadurch gekennzeichnet, dass** das Medium ein Hydrauliköl ist.

## Claims

1. Assembly having a first component (11), having a second component (12) which is enclosed by the first component (11), having a diaphragm (13) which covers a radial gap (14) between the components (11, 12) and is fixed sealingly on the first and second component (11, 12), and having a volume (15) of a medium, which volume (15) is enclosed by the components (11, 12) and the diaphragm (13), a filling valve (16) for introducing the medium being arranged in one of the components (11, 12), and the filling valve (16) being arranged in a filling channel (17) which runs in the component (11, 12), the filling channel (17) beginning on an outer side of the component (11, 12), which outer side lies outside the volume (15) which is enclosed by way of the diaphragm (13), **characterized in that** the filling valve (16) is configured as a check valve with a spring return mechanism.

2. Assembly according to Claim 1, **characterized in that** the filling channel (17) is configured as a stepped bore (18) with a first bore section (181) and a second bore section (182) of greater diameter, and a valve seat (19) for a valve member (20) is configured at the transition of the first and second bore section (181, 182).

3. Assembly according to Claim 2, **characterized in that** the stepped bore (18) has a third bore section (183) which adjoins the second bore section (182) and is arranged eccentrically with respect to the bore axis with a greater diameter than the diameter of the second bore section (182), and **in that** a spring arm (21) which loads the valve member (20) is fixed in the third bore section (183).

4. Assembly according to Claim 3, **characterized in that** the spring arm (21), as part of a shell-shaped spring element (22) with a shell bottom (221) and a shell edge (222), is cut from the shell bottom (221), and **in that** the spring element (22) is inserted, preferably pressed or welded, with the shell edge (222) non-displaceably into the third bore section (183).

5. Assembly according to Claim 4, **characterized in that** the spring element (22) is a stamped and bent part made from high-strength spring steel.

6. Assembly according to one of Claims 2 to 5, **characterized in that** the valve member (20) is a steel ball which is coated with PTFE.

7. Assembly according to Claim 6, **characterized in that** the valve seat (19) has a bevel angle α with respect to the bore axis of between 5° and 60°.

8. Assembly according to one of Claims 1 to 7, **characterized by** its arrangement in a valve housing (30) of a valve for metering in fluid.

9. Assembly according to Claim 8, **characterized in that** the first component (11) forms a valve body (42) which closes off a valve chamber (41) in the valve housing (30), and the second component (12) forms a valve needle (33) which is guided slidingly in the valve body (42) for controlling a metering opening (32) which is arranged downstream of the valve chamber (41), and **in that** the filling channel (17) which contains the filling valve (16) is arranged in the valve body (42), and the enclosed volume (15) is concentrated in a covering region (56) which is covered by the diaphragm (13) on the valve body (42).

10. Assembly according to Claim 9, **characterized in that** the medium is a soft substance with a high yield point, for example a Bingham fluid, a kneadable material, an elastomer, viscous silicone oil or transformer oil.

11. Assembly according to Claim 8, **characterized in that**, in a hydraulic coupler (36) which is integrated into the valve housing (30), the first component (11) forms a pot-shaped coupler housing (50) with a pot bottom (501) and a pot shell (502) and the second component (12) forms a coupler member (52) which can be loaded by a force transmission element with a piston (53) which is guided slidingly in the coupler housing (50) and a coupler pin (54) which is connected fixedly to the piston (53) in order to attach the force transmission element, **in that** the piston (53) delimits the radial gap (14) together with the pot shell (502) of the coupler housing (50) and delimits a coupler gap (55) with the pot bottom (501) of the coupler housing (50), and **in that** the filling channel (17) which contains the filling valve (16) is arranged in the coupler member (52), and the enclosed volume (15) is distributed via the radial gap (14) to the coupler gap (55) and to a covering region (56) which is covered by the diaphragm (13) on the coupler housing (50) and the coupler member (52).

12. Assembly according to Claim 11, **characterized in that** the coupler member-side fixing of the diaphragm (13) is carried out on the coupler pin (54), **in that** the coupler pin (54) is fastened in a central recess (57) which is provided in the piston (53), and, with the bottom of the recess (57), delimits a cavity (58) which is connected to the covering region (56) of the diaphragm (13), and **in that** the filling channel (17) which contains the filling valve (16) runs in the coupler pin (54) and opens into the cavity (58), and the enclosed volume (15) extends as far as into the cavity (58).

13. Assembly according to Claim 11 or 12, **characterized in that** the medium is a hydraulic oil.

## Revendications

1. Module comprenant un premier composant (11), un deuxième composant (12) entouré par le premier composant (11), une membrane (13) fixée hermétiquement sur le premier et le deuxième composant (11, 12), recouvrant un interstice radial (14) entre les composants (11, 12) et un volume (15) d'un fluide, enfermé par les composants (11, 12) et la membrane (13), une soupape de remplissage (16) étant disposée dans l'un des composants (11, 12) pour introduire le fluide, et la soupape de remplissage (16) étant disposée dans un canal de remplissage (17) s'étendant dans le composant (11, 12), le canal de remplissage (17) commençant au niveau d'un côté extérieur du composant (11, 12) qui se situe à l'extérieur du volume (15) enfermé par la membrane (13),
**caractérisé en ce que**
la soupape de remplissage (16) est réalisée sous forme de clapet antiretour avec une position de rappel par ressort.

2. Module selon la revendication 1, **caractérisé en ce que** le canal de remplissage (17) est réalisé sous forme d'alésage étagé (18) avec une première portion d'alésage (181) et une deuxième portion d'alésage (182) de plus grand diamètre et, au niveau de la transition entre la première et la deuxième portion d'alésage (181, 182), un siège de soupape (19) pour un organe de soupape (20).

3. Module selon la revendication 2, **caractérisé en ce que** l'alésage étagé (18) présente une troisième portion d'alésage (183) se raccordant à la deuxième portion d'alésage (182), laquelle est disposée de manière excentrée par rapport à l'axe d'alésage avec un plus grand diamètre par rapport au diamètre de la deuxième portion d'alésage (182), et **en ce qu'**un bras de ressort (21) sollicitant l'organe de soupape (20) est fixé dans la troisième portion d'alésage (183).

4. Module selon la revendication 3, **caractérisé en ce que** le bras de ressort (21), en tant que pièce d'un élément de ressort en forme de coque (22) avec un fond de coque (221) et un bord de coque (222), est libéré par découpage hors du fond de coque (221) et **en ce que** l'élément de ressort (22) avec le bord de coque (222) est inséré de manière immuable, de préférence par pressage ou soudage, dans la troisième portion d'alésage (183).

5. Module selon la revendication 4, **caractérisé en ce que** l'élément de ressort (22) est une pièce découpée et pliée en acier à ressort de grande résistance.

6. Module selon l'une quelconque des revendications 2 à 5, **caractérisé en ce que** l'organe de soupape (20) est une bille d'acier revêtue de PTFE.

7. Module selon la revendication 6, **caractérisé en ce que** le siège de soupape (19) présente un angle d'oblicité α vers l'axe d'alésage, compris entre 5° et 60°.

8. Module selon l'une quelconque des revendications 1 à 7, **caractérisé en ce qu'**il est agencé dans un boîtier de soupape (30) d'une soupape de dosage de fluide.

9. Module selon la revendication 8, **caractérisé en ce que** le premier composant (11) forme un corps de soupape (42) fermant une chambre de soupape (41) dans le boîtier de soupape (30) et le deuxième composant (12) forme un pointeau de soupape (33) guidé de manière coulissante dans le corps de soupape (42) pour commander une ouverture de dosage (32) montée en aval de la chambre de soupape (41) et **en ce que** le canal de remplissage (17) contenant la soupape de remplissage (16) est disposé dans le corps de soupape (42) et le volume enfermé (15) est concentré dans une région de recouvrement (56) recouverte par la membrane (13) au niveau du corps de soupape (42).

10. Module selon la revendication 9, **caractérisé en ce que** le fluide est une substance molle ayant une limite d'écoulement élevée, par exemple un liquide Bingham, un matériau malléable, d'un élastomère, une huile de silicone épaisse ou une huile de transformateur.

11. Module selon la revendication 8, **caractérisé en ce que**, dans un coupleur hydraulique (36) intégré dans le boîtier de soupape (30), le premier composant (11) forme un boîtier de coupleur en forme de pot (50) avec un fond de pot (501) et une enveloppe de pot (502) et le deuxième composant (12) forme un organe de coupleur (52) pouvant être sollicité par un élément de transfert de force avec un piston (53) guidé de manière coulissante dans le boîtier de coupleur (50) et un boulon d'accouplement (54) connecté fixement au piston (53) pour le raccordement à l'élément de transfert de force, **en ce que** le piston (53), conjointement avec l'enveloppe de pot (502) du boîtier de coupleur (50), délimite l'interstice radial (14), et avec le fond de pot (501) du boîtier de coupleur (50), délimite un interstice de coupleur (55), et **en ce que** le canal de remplissage (17) contenant la soupape de remplissage (16) est disposé dans l'organe de coupleur (52) et le volume enfermé (15) est divisé par le biais de l'interstice radial (14) vers une région de recouvrement (56) recouverte par la membrane (13) au niveau du boîtier de coupleur (50) et de l'organe de coupleur (52) et vers l'interstice de coupleur (55).

12. Module selon la revendication 11, **caractérisé en ce que** la fixation du côté de l'organe de coupleur de la membrane (13) est réalisée au niveau du boulon d'accouplement (54), **en ce que** le boulon d'accouplement (54) est fixé dans un évidement central (57) prévu dans le piston (53) et délimite avec le fond de l'évidement (57) une cavité (58) en liaison avec la région de recouvrement (56) de la membrane (13) et **en ce que** le canal de remplissage (17) contenant la soupape de remplissage (16) s'étend dans le boulon d'accouplement (54) et débouche dans la cavité (58) et le volume enfermé (15) s'étend jusque dans la cavité (58).

13. Module selon la revendication 11 ou 12, **caractérisé en ce que** le fluide est une huile hydraulique.
